# EUROPEAN PATENT SPECIFICATION

(11) **EP 3 019 699 B1**
(45) Date of publication and mention of the grant of the patent: **13.09.2017**
(21) Application number: 14741975.8
(22) Date of filing: 10.07.2014
(51) Int. Cl.: E21C 50/00, E02F 3/88, E02F 7/06

(54) **VACUUM CONTROL METHOD FOR A RISER LINE**
VAKUUMSTEUERUNGSVERFAHREN FÜR EINE STEIGROHRLEITUNG
PROCÉDÉ DE RÉGULATION DE VIDE POUR LIGNE DE COLONNE MONTANTE

(30) Priority: 12.07.2013 NL 2011160
(43) Date of publication of application: 18.05.2016
(73) Proprietor: IHC Holland IE B.V., 3361 EP Sliedrecht (NL)
(72) Inventor: LUCIEER, Pieter Abraham, NL-3039 LH Rotterdam (NL)
(74) Representative: Nederlandsch Octrooibureau
(86) International application number: PCT/NL2014/050469
(87) International publication number: WO 2015/005786

(56) References cited:
- WO-A1-2011/156867
- US-A1- 2012 234 552

## Description

### Background

The present invention relates to a mining method for deep sea.

WO2012091706 relates to a subsea pressure control system for a well annulus, which system includes s subsea choke which variably restricts flow of drilling fluid from a well annulus to a surface location, the choke being positioned at a subsea location, and a subsea process control system which automatically operates the subsea choke, whereby a desired pressure is maintained in the well annulus. Closest prior art document WO 2011/156867 A1 discloses the preamble of independent method claim 1. In general when material is excavated at the seafloor, pumped upward to a vessel and processed, the transported volume mostly contains waste. These will be returned via a pipe downward to the seafloor. In mining, slurry heavier than water will be returned to the seafloor. If the hydrostatic pressure of the slurry column in the return pipe is higher than sum of the friction losses and the water column pressure, than a high risk of vacuum at top of return pipe remains.

### Summary of the invention

The invention aims to improve the controllability of a return flow in a deep sea mining system.

Another object of the invention is to improve a known deep sea mining method in that a problem associated therewith is at least partly solved.

Yet another object of the invention is to provide an alternative deep sea mining method.

According to a first aspect of the current invention the object is realized with a method for deep sea mining comprising;
- generating an upward flow of excavated matter in a riser line from the bottom of a body of water to a matter processing platform,
- processing the matter at the processing platform into a valuable and a non valuable matter part,
- generating a return flow in a return pipe of a mixture of seawater and a non-valuable part of the matter from the processing platform towards the bottom of the body of water,
- controlling the pressure in the return pipe for avoiding collapse of the return pipe and/or cavitation in the return pipe, in particular for avoiding collapse of or cavitation in an upper part of the return pipe.

Because of the control of the pressure in the return pipe, the structural integrity of the pipe can be maintained while optimising use of the pipe capacity. In addition, the pressure control enables to recover energy from the return flow.

The problem with returning a slurry heavier than water is that if the hydrostatic pressure of the column is higher than the friction losses in the pipe, the matter will accelerate and a vacuum might be created in the top sections of the return pipe. This vacuum might lead to collapse of the pipes. In known non-mining systems, such as fall pipe vessels, the dumping rate as well as the water flow can be controlled, and thereby the whole process is controllable. In mining systems however, the return flow depends on the production flow, and the matter as well as the water flow are pre-determined and not flexible. Now, according to the invention by controlling actively the vacuum in the return pipe, the required flexibility can be achieved.

The invention is particularly useful for return pipes which at least partly operate according to a free fall principle. It will however be clear that in a pressure driven return flow, a "free fall" may occur as well.

Where the invention relates to mining operations and a matter flow, WO2012091706 distinctively relate to operations concerning an oil- or gas-flow. The oil- and gas operations is a different technical field compared with mining operations mainly because of the different flow which imposes different requirements to systems and operations.

Deep sea here means seas having a depth of at least 500 meters, preferably at least 1000 meters.

A matter processing platform may be a vessel, a subsea system or even a system supported by the bottom of the body of water like an ocean.

Examples of processes performed at the matter processing platform are for instance: The flow of excavated matter may be separated into a valuable matter part like gas, oil and /or hydrates, and a non valuable matter part, like water. Also, moisture may be removed from the upward flow of excavated matter by a "dehydration module". Optionally gas may be compressed. In addition, water may be injected in the return flow which (sea)water may have been pre-treated before injection.

In an embodiment of the method according to the invention, controlling the pressure in the return pipe comprises measuring an internal return pipe pressure for providing a return pipe pressure signal.

In an embodiment of the method, controlling the pressure in the return pipe comprises controlling the flow rate of the return flow.

In an embodiment of the method, controlling the flow rate of the return flow comprises providing pressure control means.

As an option, a buffer, or intermediate buffers, may be created at the top of the return pipe, and create a proportional feed of material to the return pipe. Consequence of this is the deck space and load capacity required to maintain this buffer.

In an embodiment of the method, the pressure control means comprise active and/or passive means.

In an embodiment of the method, the pressure control means are selected from restrictions like a smaller pipe diameter, systems of bends, turbines, pumps used as turbines, pumps, and control means for height of mixture column.

These pressure control means act in other words as means for energy dissipation which will be included in the return piper or also line of the system to make the vacuum controllable by balancing the dissipation losses (i.e. pipe resistance) with the potential energy, and - if possible - to recapture part of potential energy dissipated by the system.

In an embodiment of the method, controlling the flow rate of the return flow comprises, operating the pressure control means in response to the return pipe pressure signal.

In an embodiment of the method, the pressure control means operates within a response time limit in response to the return pipe pressure signal, wherein the response time limit is between lower 0,5 seconds and 10 seconds, preferably between 1 second and 5 seconds.

The excavated matter may comprise gas hydrates.

According to a further aspect of the current invention the object is realized with a deep sea mining flow control system for a return line, the system comprising;
- a measurement means for measuring an internal pressure of a return pipe for providing a return pipe pressure signal,
- pressure control means for controlling a return flow in the return pipe of a mixture of seawater and a non valuable matter part from a processing platform towards a bottom of a body of water,

In an embodiment of the deep sea mining flow control system, the pressure control means comprise active and/or passive means.

In an embodiment of the deep sea mining flow control system, the pressure control means are selected from restrictors, systems of bends, turbines, pumps used as turbines, pumps, and control means for height of mixture column.

According to an even further aspect of the current invention the object is realized with a deep sea mining system comprising a flow control system for a return line;
- a riser line for therein generating an upward flow of valuable matter from a bottom of a body of water to a matter processing platform,
- the matter processing platform for processing matter into a valuable and a non valuable matter part,
- a return pipe for therein generating a return flow of a mixture of seawater and a non-valuable part of the matter from the processing platform towards the bottom of the body of water, and a
- deep sea mining flow control system according to the invention for controlling the pressure in the return pipe for avoiding collapse of the return pipe and/or cavitation in the return pipe, in particular for avoiding collapse of and/or cavitation in an upper part of the return pipe.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to a preferred embodiment shown in the drawing wherein shown in:

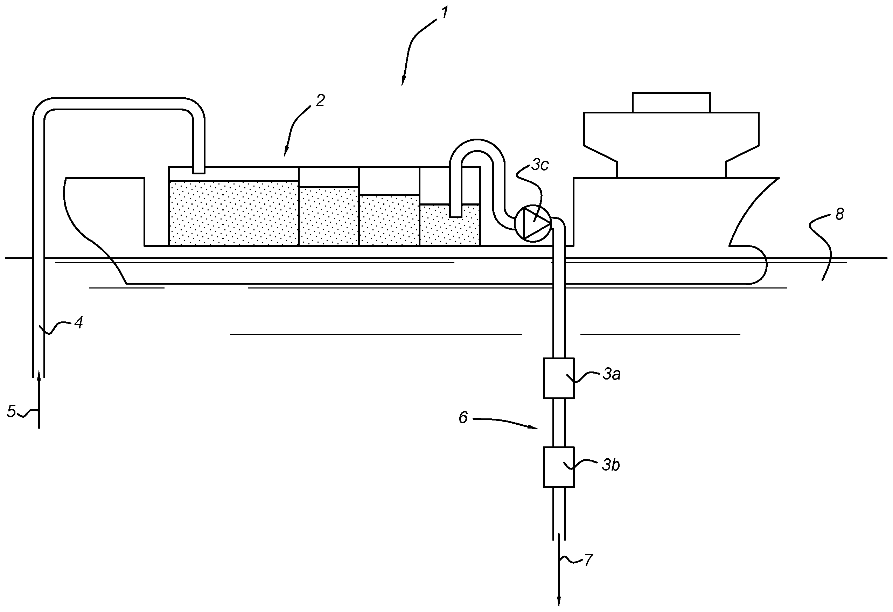

Fig. 1 a schematic side view of a deep sea mining system according to the invention

### Detailed description of embodiments

In the figure a deep sea mining system 1 is party shown. The deep sea mining system comprises a flow control system 3a-c for a return line 6. The deep sea mining system comprises a matter processing platform 2 for processing matter into a valuable and a non valuable matter part. The deep sea mining system 1 comprises a riser line 4 for therein generating an upward flow 5 of valuable matter from a bottom of a body of water 8 to the matter processing platform 2.

The deep sea mining system 1 comprises a return pipe 6 for generating a return flow 7 of a mixture of seawater and a non-valuable part of the matter from the processing platform 2 towards the bottom of the body of water.

The deep sea mining system 1 comprises a deep sea mining flow control system 3a-c for controlling the pressure in the return pipe 6 for avoiding collapse of the return pipe 6. Examples of such flow control systems are restrictors, systems of bends, turbines, pumps used as turbines, and pumps.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Method for deep sea mining comprising;
- generating an upward flow of excavated matter in a riser line from the bottom of a body of water to a matter processing platform,
- processing the matter at the processing platform into a valuable and a non valuable matter part,
- generating a return flow in a return pipe of a mixture of seawater and the non-valuable part of the matter from the processing platform towards the bottom of the body of water, **characterised by**
- controlling the pressure in the return pipe for avoiding collapse of the return pipe and/or cavitation in the return pipe, in particular for avoiding collapse of or cavitation in an upper part of the return pipe.

2. Method according to claim 1, wherein controlling the pressure in the return pipe comprises measuring an internal return pipe pressure for providing a return pipe pressure signal.

3. Method according to a preceding claim, wherein controlling the pressure in the return pipe comprises controlling the flow rate of the return flow.

4. Method according to a preceding claim, wherein controlling the flow rate of the return flow comprises providing pressure control means.

5. Method according to claim 4, wherein the pressure control means comprise active and passive means.

6. Method according to claim 5, wherein the pressure control means are selected from restrictions, systems of bends, turbines, pumps used as turbines, pumps, and control means for height of mixture column.

7. Method according to a preceding claim, wherein controlling the flow rate of the return flow comprises, operating the pressure control means in response to the return pipe pressure signal.

8. Method according to claim 7, wherein the pressure control means operates within a response time limit in response to the return pipe pressure signal, wherein the response time limit is between 0,5 seconds and 10 seconds.

9. Method according to a preceding claim, wherein the matter comprises gas hydrates.

10. Deep sea mining flow control system for a return line, **characterised in that** it comprises:
- a measurement means for measuring an internal pressure of a return pipe for providing a return pipe pressure signal,
- pressure control means for controlling a return flow in the return pipe of a mixture of seawater and a non valuable matter part from a processing platform towards a bottom of a body of water,

11. Deep sea mining flow control system according to claim 10, wherein the pressure control means comprise active and passive means.

12. Deep sea mining flow control system according to claim 11, wherein the pressure control means are selected from restrictors, systems of bends, turbines, pumps used as turbines, pumps, and control means for height of mixture column.

13. Deep sea mining system comprising;
- a matter processing platform for processing matter into a valuable and a non valuable matter part,
- a riser line for therein generating an upward flow of excavated matter from a bottom of a body of water to the matter processing platform,
- a return pipe for therein generating a return flow of a mixture of seawater and the non-valuable matter part from the processing platform towards the bottom of the body of water, and a
- deep sea mining flow control system according to a claim 10-12 for controlling the pressure in the return pipe for avoiding collapse of the return pipe and/or cavitation in the return pipe, in particular for avoiding collapse of and/or cavitation in an upper part of the return pipe.

## Patentansprüche

1. Verfahren für den Tiefseebergbau, aufweisend:
- Erzeugen einer Aufwärtsströmung von ausgegrabenen Stoffen in einer Steigrohrleitung vom Boden eines Gewässers zu einer Stoffverarbeitungs-Plattform,
- Bearbeiten des Stoffes an der Verarbeitungsplattform zu einem wertvollen und nicht wertvollen Stoffteil,
- Erzeugen einer Rücklaufströmung in einem Rücklaufrohr aus einer Mischung aus Seewasser und dem nicht wertvollen Teil des Stoffes von der Verarbeitungsplattform in Richtung des Grunds des Gewässers,
**gekennzeichnet durch**
- das Steuern des Druckes in dem Rücklaufrohr zur Vermeidung eines Einbruchs des Rücklaufrohres und/oder der Kavitation in dem Rücklaufrohr, insbesondere zur Vermeidung eines Einbruchs oder der Kavitation im oberen Teil des Rücklaufrohres.

2. Verfahren nach Anspruch 1, wobei das Steuern des Druckes in dem Rücklaufrohr aufweist, Messen eines internen Rücklaufrohrdruckes zur Bereitstellung eines Rücklaufrohr-Drucksignales.

3. Verfahren nach einem der vorstehenden Ansprüche, wobei das Steuern des Druckes in dem Rücklaufrohr aufweist, Steuern der Durchflussrate der Rücklaufströmung.

4. Verfahren nach einem der vorstehenden Ansprüche, wobei das Steuern der Durchflussrate der Rücklaufströmung das Vorsehen von Druckregelmitteln aufweist.

5. Verfahren nach Anspruch 4, wobei das Druckregelmittel aktive und passive Mittel aufweist.

6. Verfahren nach Anspruch 5, wobei das Druckregelmittel ausgewählt ist aus der Auswahl, Verengungen, Systeme aus Rohrbögen, Turbinen, Pumpen, welche als Turbinen verwendet werden, Pumpen, und Steuerungsmittel für die Höhe der Mischsäule.

7. Verfahren nach einem der vorstehenden Ansprüche, wobei das Steuern der Durchflussrate der Rücklaufströmung aufweist, Betätigen des Druckregelmittels in Reaktion auf ein Rücklaufrohr-Drucksignal.

8. Verfahren nach Anspruch 7, wobei das Druckregelmittel innerhalb einer Reaktionszeitgrenze in Reaktion auf das Rücklaufrohr-Drucksignal arbeitet, wobei die Reaktionszeitgrenze zwischen 0,5 Sekunden und 10 Sekunden liegt.

9. Verfahren nach einem der vorstehenden Ansprüche, wobei der Stoff Gashydrate enthält.

10. Tiefseebergbau-Strömungssteuerungssystem für eine Rücklaufleitung, **dadurch gekennzeichnet, dass** dieses aufweist:
- eine Messeinrichtung zum Messen eines Innendruckes eines Rücklaufrohres zur Bereitstellung eines Rücklaufrohr-Drucksignales,
- eine Drucksteuereinrichtung zum Steuern einer Rücklaufströmung in dem Rücklaufrohr aus einer Mischung aus Seewasser und einem nicht wertvollen Stoffteil von einer Verarbeitungsplattform in Richtung des Bodens eines Gewässers.

11. Tiefseebergbau-Strömungssteuersystem nach Anspruch 10, wobei die Drucksteuereinrichtung aktive und passive Mittel aufweist.

12. Tiefseebergbau-Strömungssteuerungssystem nach Anspruch 11, wobei die Drucksteuereinrichtung ausgewählt ist aus der Auswahl, Verengungen, Systeme aus Rohrbögen, Turbinen, Pumpen, welche als Turbinen verwendet werden, Pumpen, und Steuerungsmittel für die Höhe der Mischsäule.

13. Tiefseebergbausystem aufweisend:
- eine Stoffverarbeitungs-Plattform zum Verarbeiten von Stoffen in wertvolle und nicht wertvolle Stoffteile,
- eine Steigrohrleitung für ein Erzeugen einer Aufwärtsströmung eines abgebauten Stoffes darin von dem Boden eines Gewässers zur Stoffverarbeitungs-Plattform,
- ein Rücklaufrohr zum Erzeugen einer Rücklaufströmung einer Mischung aus Seewasser und dem nicht wertvollen Stoffteil darin von der Verarbeitungs-Plattform in Richtung des Bodens des Gewässers, und
- ein Tiefseebergbau-Strömungssteuerungssystem nach einem der Ansprüche 10 bis 12 zum Steuern des Druckes in dem Rücklaufrohr zum Vermeiden des Einbruches des Rücklaufrohres und/oder der Kavitation in dem Rücklaufrohr, insbesondere zum Vermeiden des Einbruches von und/oder der Kavitation in einem oberen Teil des Rücklaufrohres.

## Revendications

1. Procédé d'exploitation minière en eaux profondes, comprenant les étapes suivantes consistant à :
- générer un flux ascendant de matière excavée dans une colonne montante allant du fond d'une étendue d'eau à une plate-forme de traitement de la matière,
- traiter la matière au niveau de la plate-forme de traitement pour obtenir une partie de matière de valeur et une partie de matière sans valeur,
- générer un flux de retour, constitué d'un mélange d'eau de mer et de la partie de matière sans valeur, dans un conduit de retour allant de la plate-forme de traitement au fond de l'étendue d'eau,
**caractérisé par** les étapes consistant à
- commander la pression dans le conduit de retour pour éviter l'écrasement du conduit de retour et/ou la cavitation dans le conduit de retour, en particulier pour éviter l'écrasement ou la cavitation dans une partie supérieure du conduit de retour.

2. Procédé selon la revendication 1, dans lequel la commande de la pression dans le conduit de retour comprend la mesure de la pression interne dans le conduit de retour pour produire un signal de pression dans le conduit de retour.

3. Procédé selon l'une des revendications précédentes, dans lequel la commande de la pression dans le conduit de retour comprend la commande du débit du flux de retour.

4. Procédé selon l'une des revendications précédentes, dans lequel le débit du flux de retour comprend la production de moyens de commande de pression.

5. Procédé selon la revendication 4, dans lequel les moyens de commande de pression comprennent des moyens actifs et passifs.

6. Procédé selon la revendication 5, dans lequel les moyens de commande de pression sont choisis parmi les restrictions, les systèmes de courbures, les turbines, les pompes utilisées comme turbines, les pompes et les moyens de commande de la hauteur de la colonne de mélange.

7. Procédé selon l'une des revendications précédentes, dans lequel la commande du débit du flux de retour comprend la mise en oeuvre des moyens de commande de pression en réponse au signal de pression dans la conduite de retour.

8. Procédé selon la revendication 7, dans lequel les moyens de commande de pression fonctionnent dans une limite de temps de réponse en réponse au signal de pression dans le conduit de retour, la limite de temps de réponse étant comprise entre 0,5 seconde et 10 secondes.

9. Procédé selon l'une des revendications précédentes, dans lequel la matière comprend des hydrates de gaz.

10. Système de commande de débit minier en eaux profondes pour conduit de retour, **caractérisé en ce qu'**il comprend :
- un moyen de mesure destiné à mesurer la pression interne dans un conduit de retour pour produire un signal de pression de conduit de retour,
- des moyens de commande de pression pour commander un flux de retour, constitué d'un mélange d'eau de mer et d'une partie de matière sans valeur, dans le conduit de retour allant d'une plate-forme de traitement au fond d'une étendue d'eau,

11. Système de commande de flux minier en eaux profondes selon la revendication 10, dans lequel les moyens de commande de pression comprennent des moyens actifs et des moyens passifs.

12. Système de commande de flux minier en eaux profondes selon la revendication 11, dans lequel les moyens de commande de pression sont sélectionnés parmi les restricteurs, les systèmes de courbures, les turbines, les pompes utilisées comme turbines, les pompes et les moyens de commande de la hauteur de la colonne de mélange.

13. Système d'exploitation minière en eaux profondes comprenant,
- une plate-forme de traitement de matière destinée à traiter de la matière pour obtenir une partie de valeur et une partie sans valeur,
- une colonne montante destinée à générer à l'intérieur un flux ascendant de matière excavée allant du fond d'une étendue d'eau à la plate-forme de traitement de matière,
- un conduit de retour destiné à générer à l'intérieur un flux de retour d'un mélange d'eau de mer et de matière sans valeur et allant de la plate-forme de traitement au fond de l'étendue d'eau et
- un système de commande de flux minier en eaux profondeurs selon l'une des revendications 10 à 12 pour commander la pression dans le conduit de retour pour éviter l'écrasement du conduit de retour et/ou la cavitation dans le conduit de retour, en particulier pour éviter l'écrasement et/ou la cavitation dans une partie supérieure du conduit de retour.
